# EUROPEAN PATENT APPLICATION

(11) **EP 2 338 806 A1**
(43) Date of publication of application: **29.06.2011**
(21) Application number: 10380141.1
(22) Date of filing: 24.11.2010
(51) Int. Cl.: B65D 65/18, B31B 23/00, B65D 33/04

(54) **Plastic bag and its method of manufacture**

(30) Priority: 22.12.2009 ES 200931231
(71) Applicant: Magab Inmuebles, S.L.U., 28946 Fuenlabrada (ES)
(72) Inventor: Barrasus Herrero, Antonio, 28946 Fuenlabrada (Madrid) (ES)
(74) Representative: Carvajal y Urquijo, Isabel

(57) **Abstract**

Manufacturing procedure of plastic material bags consisting of the longitudinal joining of at least two starting bands of plastic of different composition, a first transparent or translucent polymer-based band and a second opaque band consisting of polymers with a polyethylene-based additive of high density and high molecular weight and titanium dioxide and calcium carbonate loadings. At least part (9) of one of the walls (7) of the obtained bag is transparent, while the other wall (6) or part thereof is opaque and has a superficial aspect that simulates paper.

## Description

### Field of the invention

The present invention refers to a manufacturing procedure of plastic bags and more specifically for the manufacturing of plastic bags that, although being obtained completely from plastic material, they feature walls or pieces that present a different aspect which simulates they were obtained from other materials, specifically from plastic and paper. Another object of the invention is the bag obtained through the aforementioned procedure.

### Background of the invention

Bags, whose walls are made from different materials, generally one wall of plastic and the other made of paper, are already known for a great number of applications.

The manufacturing of this kind of bags presents problems, due to the need to handle bands of different kinds of material. Since one wall is made of paper, the joining between the two walls must be completed by means of an adhesive which has an negative impact on the final cost of the product, compared to bags completely made of plastic, in which the joining of walls can be performed by means of thermal bonding, without having to add any adhesive and with a faster joining process.

Another problem associated to bags made of plastic and paper is that they are non-recyclable since they include materials of different kinds, and in case we want to recycle them, it would be necessary to separate the different materials forming the bag.

On the other hand, plastic and paper bags present the risk of easily breaking through the paper wall, which may render its content useless when the bag is used for the packaging of food products.

Another drawback for this kind of bags made of plastic and paper is their lack of tightness due to the porous nature of the paper found in one of the walls or parts thereof.

### Description of the invention

The object of the present invention is a procedure for the manufacturing of plastic bags whose walls are all made of plastic, but with an external aspect which simulates its constitution, total or partial, of a different material. Specifically, the bag obtained by means of the procedure of the invention is characterized in that one of its walls or part thereof has an external aspect which corresponds to the material conforming it, that is to say, an aspect of plastic, while the aspect of the other wall or part simulates paper texture, colour and structure.

To that end, according to the procedure of the invention, the bag is formed with two plastic materials of different composition and aspect, so that the obtained bag simulates being made of different materials, specifically plastic and paper.

Moreover, preferably, the wall made of plastic and with plastic aspect will be transparent or translucent, while the wall made of plastic with paper aspect will be opaque and it can have a colour corresponding to the kind of paper we wish to simulate.

According to the procedure of the invention, the bag is obtained from at least two plastic material starting bands of different composition, one or more first starting bands are made of polymers and one or more second bands are made of polymers with a polyethylene-based additive of high density and high molecular weight and titanium dioxide and calcium carbonate loadings.

These two starting bands are partially overlapped from one of their longitudinal edges, joined by means of thermal bonding, which results in a wider band from which the bags will be obtained through traditional processes, which may include folding operations, thermal sealing and cutting.

Since the starting bands are made of the same material, the final band from which the bags will be obtained is completely made of plastic, so that the necessary joints for the bag formation can be performed trough thermal bonding, without having to add any adhesive materials.

The starting bands can have the same or different width, so that when creating the bag one of its walls has the same aspect and nature throughout its entire surface, while the other wall can present zones of different aspect and nature.

In one embodiment, the final band is made of only two plastic starting bands of different composition.

The wall, wall part or parts the aspect and nature of which corresponds to plastic material can be transparent or translucent, while the wall, wall part or parts with paper aspect will be opaque.

The obtained bag, entirely made of plastic, offers the same endurance in all its walls, so it will not present breaking problems during manipulation, filling, carrying, etc., preserving at all times the characteristics of the contained product.

For the same reasons, the bag of the invention will not post any problems during the manufacturing, as there is only one material to manipulate, or during recycling, since the entire bag is made of the same material.

Another advantage derived from the plastic bag constitution is the possibility of printing texts or drawings with the same printing process in any area of the walls, allowing the customization of the bags with digital printings, using combinations of solvent printing and digital printing, etc.

The procedure of the invention also allows the customization of packages with different textures and paper effects combined with transparent windows through which the product can be seen.

### Brief description of the drawings

The attached drawings show, schematically and as a non-limiting example, the manufacturing process of the bags of the invention, as well as the bag obtained by means of this process. In the drawings:
Figure 1 shows a plan view of two starting bands of plastic material used for the formation of bags.
Figure 2 shows a schematic and longitudinal sectional view of a bag created from the final band represented in figure 1.
Figure 3 is a front elevation view of the bag in figure 2.

### Detailed description of an embodiment

The characteristics and advantages of the procedure and bag of the invention will be better understood with the following description, made with reference to the embodiment example shown in the aforementioned drawings.

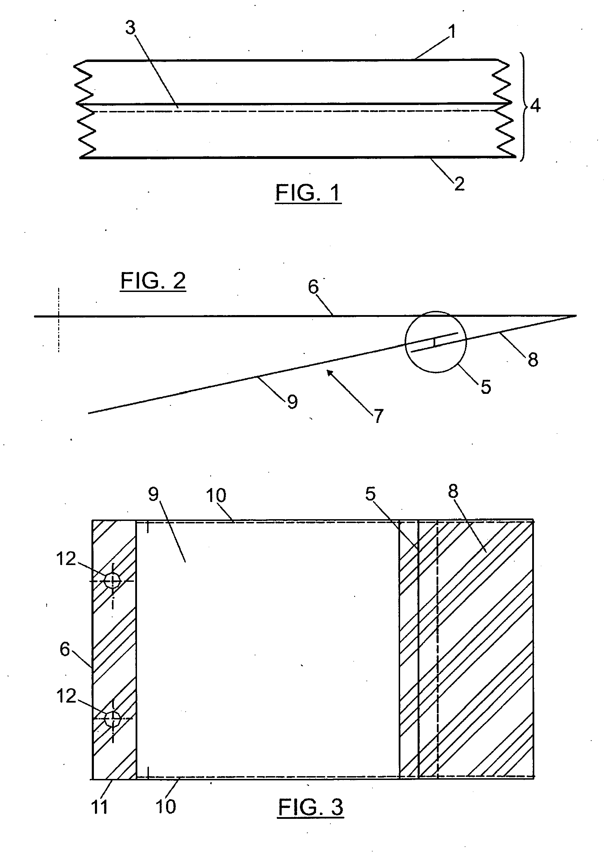

Figure 1 shows two starting bands of plastic material, a first band referenced with number 1 and a second band referenced with number 2, both partially overlapped throughout one of their longitudinal edges according to line 3 by means of which the two plastic bands are joined by thermal bonding.

The first plastic band 1 is constituted with a polymer, while the second plastic band 2 comprises polymers with a polyethylene-based additive of high density and high molecular weight and titanium dioxide and calcium carbonate loadings. The composition of this second band 2, gives the band a totally different aspect from the first band 1 which is made of one polymer.

The aspect of the first band 1 is of plastic material, while the second band 2 presents an aspect simulating paper texture, colour and structure.

The joining of bands 1 and 2 results in the final plastic band 4, with longitudinal zones of different aspect, from which the bags will be manufactured through a traditional process which may include cutting operations, joining through thermal bonding and folding.

The first band 1 of polymer can be transparent or translucent, while the second band 2 will always be opaque.

The bags shown in figures 2 and 3 are obtained from the final band 4 in figure 1.

In figure 2, which corresponds to a longitudinal schematic section of the bag, number 5 corresponds to the longitudinal bonding 3 of bands 1 and 2 in figure 1. One of the walls of the bag, the one with number 6, is entirely constituted from the second band 2, made of the material that simulates paper, while the other wall 7 comprises a part or zone 8 of the same material as the wall 6 and a part 9 obtained from the first band 1 of transparent material.

Both walls 6 and 7, as shown in figure 3, are joined by their longitudinal edges by lines of thermal bonding 10.

Unlike the example represented in the drawings, the wall 7 could be entirely of the same nature as the zone or part 9. Any other combination is possible to obtain walls or zones thereof totally opaque and transparent.

In the example represented in figures 2 and 3, the wall 6 with paper aspect sticks out at the opening of the bag with respect to the wall 7, in a line 11 where there are two holes 12. However, within the scope of the present invention, any other structure or combination is possible.

Even though in the described example the bag is made of only two starting bands, the final band from which the bags are manufactured could be formed by a greater number of starting bands of one composition or another, or of both.

## Claims

1. Manufacturing procedure of plastic bags, **characterized in that** it comprises longitudinally joining at least two starting bands of plastic material of different composition by means of their consecutive partial overlapping, throughout lines which are joined to one another by thermal bonding, one or more first starting bands made of polymers and one or more second starting bands with paper aspect comprising polymers with a polyethylene-based additive of high density and high molecular weight and titanium dioxide and calcium carbonate loadings, both types of staring bands, forming, once joined, a wider final band from which the bags are created by folding lines, thermal bonding and cutting.

2. Procedure according to claim 1, **characterized in that** the aforementioned first band or bands are transparent or translucent and the second band or bands are opaque.

3. Plastic material bag, **characterized in that** the smaller part of its walls is transparent or translucent, polymer-based, while at least some part of the other wall is opaque, with a superficial aspect that simulates paper and it comprises polymers and a polyethylene-based additive of high density and high molecular weight and titanium dioxide and calcium carbonate loadings.
